Europäisches Patentamt

European Patent Office

Office européen des brevets

(19)

(11) **EP 0 829 496 A1**

(12) **EUROPÄISCHE PATENTANMELDUNG**

(43) Veröffentlichungstag:
**18.03.1998 Patentblatt 1998/12**

(51) Int. Cl.$^6$: **C08G 18/10**, C09D 17/00,
C08K 3/00

(21) Anmeldenummer: **97114979.4**

(22) Anmeldetag: **29.08.1997**

(84) Benannte Vertragsstaaten:
**AT BE CH DE DK ES FI FR GB GR IE IT LI LU MC
NL PT SE**

(30) Priorität: **11.09.1996 DE 19636898**

(71) Anmelder: **BAYER AG
51368 Leverkusen (DE)**

(72) Erfinder:
- **Kirchmeyer, Stephan, Dr.
  51375 Leverkusen (DE)**
- **Kressner, Michael
  42799 Leichlingen (DE)**
- **Leitermann, Josef
  51373 Leverkusen (DE)**
- **Nyssen, Peter-Roger, Dipl.Ing.
  41542 Dormagen (DE)**
- **Wamprecht, Christian, Dr.
  41472 Neuss (DE)**

(54) **Pigmentpreparationen**

(57)  Pigmentpräparationen, enthaltend wenigstens

a) ein Pigment,

b) einen Monohydroxyether, Polyether- oder Polyesterpolyol oder Gemische davon und

c) ein Polyetherketten aufweisendes Polyisocyanat-
Additionsprodukt mit einem Gehalt an Isocyanatgruppen von maximal 1,0 Gew.-% und einen Gehalt
an über monofunktionelle Alkohole B) eingebauten,
innerhalb von Polyetherketten angeordneten Ethylenoxideinheiten (Mol-Gew. = 44 g/mol) von 30 bis
95 Gew.-%, die durch Umsetzung von Komponente
A bis E, deren Bedeutung in der Beschreibung
angegeben ist, erhalten werden,

sind hervorragend zum pigmentieren von Polyurethanschäumen geeignet.

EP 0 829 496 A1

**Beschreibung**

Die Erfindung betrifft Pigmentpräparationen, ein Verfahren zu ihrer Herstellung, ein Verfahren zum Pigmentieren von organischem makromolekularem Material, insbesondere Kunststoffen auf Polyurethanbasis sowie die Verwendung Polyisocyanat-Additionsprodukte enthaltender Pigmentpräparation zum Pigmentieren von Polyurethanschäumen.

Polyurethane als Lackbindemittel oder Beschichtungsmaterial, z.B. für Textilien, werden in einer breiten Palette als Ein- oder Zweikomponenten-Systeme, hochelastisch oder hart, lösungsmittelfrei oder lösungsmittelhaltig hergestellt. Sofern diese Materialien pigmentiert werden, stellt sich das Problem, einen geeigneten Pigmentträger zu finden, in dem die Pigmente hochkonzentriert flockungsfrei dispergiert werden können und der mit den verschiedenartigen Polyurethanen verträglich ist, um nicht für jedes spezielle System eine spezielle Pigmentpaste bereithalten zu müssen. Bei den in der Lackindustrie gebräuchlichen Zweikomponenten-Systemen steht für die Pigmentierung zumeist nur die relativ niedrigviskose Polyolkomponente zur Verfügung, in der nicht nur Ruß oder organische Pigmente wie Phthalocyanine, sondern auch anorganische Pigmente wie Eisenoxid-Gelb oder Eisenoxid-Rot nicht ohne Flockungs- und Thixotropieerscheinungen zu dispergieren sind. Das macht zunächst jede Anreibung problematisch und unwirtschaftlich, wirkt sich aber nach Zusatz der Isocyanat-Komponente zudem noch negativ auf Verlauf Glanz, Farbtiefe, Deckfähigkeit und Glanzhaltung der ausgehärteten Lackfilme aus.

In den Polyurethan-Beschichtungsmaterialien für Textilien liegen sehr hochmolekulare Körper vor, die untereinander nur begrenzt mischbar sind (Ein- oder Zweikomponenten-Systeme) und schon allein aus Viskositätsgründen keine hohen Pigmentkonzentrationen erlauben.

Neben diesen homogenen Polyurethanen haben zellförmige Polyurethane große Bedeutung erlangt, die hinsichtlich ihrer Elastizität von harten zu extrem weichen Schaumstoffen variieren können. Die Anfärbung dieser Schaumstoffe geschieht in der Hauptsache kurz vor der Verschäumung in einem Mischkopf, in dem Polyole und Polyisocyanate gegebenenfalls in Gegenwart von Hilfsstoffen mit Farbpasten innig vermischt werden. Als Bindemittel enthalten solche Farbpasten zumeist Polyester- oder Polyether-Polyole, deren Pigmentaufnahmevermögen insbesondere gegenüber Ruß jedoch so niedrig ist, daß bei Rußkonzentrationen von 10 bis 18 % bereits hochviskose Farbpasten vorliegen. Bei einer normalen Zudosierung einer Farbpaste von 3 bis 5 Gew.-%, bezogen auf die Summe aller in den Schaumstoff eingehenden Komponenten, die noch ohne großen Einfluß auf das mechanische Verhalten der Schaumstoffe ist, wird keine tiefe Anfärbung erreicht, sondern im Falle des Rußes nur eine graue Färbung.

Um hohe Farbtiefen des zu pigmentierenden Materials zu ermöglichen, die Dosierfähigkeit bei der Herstellung des Materials zu gewährleisten und den Einfluß auf das mechanische Verhalten dieser Materialien, insbesondere der Schaumstoffe, durch das Bindemittel klein zu halten, sind gut pumpbare Pasten mit hohen Pigmentgehalten gewünscht.

Eine gute Pump- und Fließfähigkeit der Farbpasten bei den gewünschten hohen Pigmentgehalten spielt auch bei der Herstellung der Farbpasten eine wichtige Rolle. Hochviskose und/oder nicht fließfähige Pasten können technisch nur auf Walzenstühlen oder in Knetern hergestellt werden, eine Herstellung mit kontinuierlichen Rührwerksperlmühlen ist nicht möglich.

Aufgabe der vorliegenden Erfindung ist daher auch, Pigmentpräparationen zur Verfügung zu stellen, die über den gesamten Herstellungsprozeß, insbesondere mit kontinuierlich betriebenen Rührwerkperlmühlen, eine möglichst niedrige Viskosität sowie gute Fließeigenschaften besitzen und somit besonders wirtschaftlich herzustellen sind.

In der Literatur wurden bereits mehrere Wege beschritten, diese Ziele zu realisieren. Aus DE-A 3 115 651 ist bekannt, dem Polyetherpolyolbindemittel als viskositätssenkendes Additiv ein Polyvinylpyrrolidon zuzusetzen. In DE-A 3 803 810 wird als Additiv zum Bindemittel ein Copolymerisat aus $\alpha$-Olefin und $\alpha$-$\beta$-ungesättigten Dicarbonsäureestern zugegeben. Weiterhin sind als Additive zu Polyesterpolyol- bzw. Polyetherpolyol-haltigen Bindemitteln titanorganische Verbindungen (DE-A 4 236 709) sowie ölmodifizierte Polyurethane (EP-A 603 546) bekannt. In DE-A 2 402 839 wird dagegen als Pigmentträger ein Carbodiimidgruppen-haltiges Harz verwendet.

Die aus dem Stande der Technik bekannten Pigmentpräparationen besitzen jedoch noch einige Nachteile. So sind manche Zusätze bzw. Bindemittelsysteme meist nur bei bestimmten Pigmenten wirksam. Weiterhin kommt es bei den bekannten Präparationen leicht zu Agglomerationen des Pigments, so daß die gewünschte Farbstärke in dem zu färbenden Material nicht erreicht werden kann. Bei einigen dieser Präparationen kommt es beispielsweise während des Schäumungsprozesses von Polyurethan zu unerwünschten Agglomerationen bzw. Aggregatbildung in Folge des Verdünnungseffektes der Paste, wodurch ebenfalls die gewünschte Farbtiefe nicht erreicht wird. Darüberhinaus besteht Bedarf, die Farbstärke des zu pigmentierenden Polyurethanschaumes bei gleichzeitig verbesserter Viskosität und Fließverhalten der Präparation zu erhöhen.

Es wurde nun gefunden, daß die aufgezeigten Nachteile mit den erfindungsgemäßen Pigmentpasten überwunden werden können, enthaltend wenigstens

a) ein Pigment,

b) einen Monohydroxyether, Polyether- oder Polyesterpolyol oder Gemische davon,

c) ein Polyetherketten aufweisendes Polyisocyanat-Additionsprodukt mit einem Gehalt an Isocyanatgruppen von maximal 1,0 Gew.-% und einen Gehalt an über monofunktionelle Alkohole B) eingebauten, innerhalb von Polyetherketten angeordneten Ethylenoxideinheiten (Mol-Gew. = 44 g/mol) von 30 bis 95 Gew.-%, das durch Umsetzung von

A) einer Polyisocyanat-Komponente, einer (mittleren) NCO-Funktionalität von 1,7 bis 6 und einem NCO-Gehalt von 5 bis 65 Gew.-% mit mindestens einer der folgenden Komponenten

B) 5 bis 100 Äquivalent-%, bezogen auf die Isocyanatgruppen von A), einer einwertigen Alkoholkomponente, bestehend aus mindestens einem einwertigen Polyetheralkohol des Molekulargewichtsbereiches 150 bis 10.000, vorzugsweise 150 bis 5.000 g/mol mit einem Gehalt an Ethylenoxideinheiten von 40 bis 99,5 Gew.-%, der durch Alkoxylierung eines einwertigen Startermoleküls hergestellt worden ist,

C) 0 bis 20 Äquivalent-%, bezogen auf die Isocyanatgruppen von A), einer einwertigen Komponente, bestehend aus mindestens einer, von den Alkoholen der Gruppe B) verschiedenen primäre oder eine gegenüber Isocyanat reaktive Gruppe aufweisenden Verbindung des Molekulargewichtsbereiches 32 bis 5.000 g/mol,

D) 0 bis 50 Äquivalent-%, bezogen auf die Isocyanatgruppen von A), einer Aminokomponente, bestehend aus mindestens einem tertiären Amin des Molekulargewichtsbereiches 88 bis 250 g/mol mit einer gegenüber Isocyanatgruppen im Sinne der NCO-Additionsreaktion reaktionsfähigen Gruppe
und

E) 0 bis 20 Äquivalent-%, bezogen auf die Isocyanatgruppen von A), an im Sinne der NCO-Additionsreaktion mindestens difunktionellen Aufbaukomponenten des Molekulargewichtsbereiches 32 bis 3.000 g/mol

unter Einhaltung einer NCO-Kennzahl von 100 bis 600 unter Urethan- und gegebenenfalls Harnstoffbildung erhältlich ist, wobei gegebenenfalls im Überschuß vorliegende NCO-Gruppen durch gleichzeitig oder anschließend erfolgende Sekundärreaktionen bis auf einen Restgehalt von maximal 1,0 Gew.-% abreagiert sind.

Die Komponente c) ist bereits aus der nicht vorveröffentlichten Anmeldung DE-A 19 508 390 bekannt.

Molekulargewichte sind im Rahmen dieser Anmeldung soweit nicht anders angegeben, mittlere als Zahlenmittel bestimmte Molekulargewichte $\overline{M}_n$.

Die in den erfindungsgemäßen Pigmentpräparationen enthaltene Komponente c) fungiert als Dispergiermittel und stellt unter Urethan- und gegebenenfalls Harnstoffbildung hergestellte Umsetzungsprodukte von Polyisocyanaten A) mit einwertigen Alkoholen B) und gegebenenfalls weiteren Ausgangskomponenten C), D) und/oder E) dar, die gegebenenfalls gleichzeitig und/oder im Anschluß an die zur Urethan- und gegebenenfalls Harnstoffbildung führende Additionsreaktion durch Sekundärreaktion von gegebenenfalls vorliegenden überschüssigen Isocyanatgruppen befreit worden sind.

Die Komponente c) weist einen Gehalt an über die Komponenten B) eingebauten Ethylenoxideinheiten (Molgew. = 44) von 30 bis 95, vorzugsweise bei 40 bis 75 Gew.-% auf. Der Gehalt an freien Isocyanatgruppen liegt unter 1 Gew.-%. Im allgemeinen sind freie Isocyanatgruppen nicht mehr nachweisbar.

Die zur Herstellung der Komponente c) eingesetzte Polyisocyanatkomponente A) weist eine (mittlere) NCO-Funktionalität von 1,7 bis 6.0, vorzugsweise größer als 2,5, insbesondere 3,0 bis 6,0 und einen NCO-Gehalt von 5 bis 65, vorzugsweise 7 bis 30 Gew.-% auf. Vorzugsweise werden Polyisocyanatkomponenten mit einer (mittleren) NCO-Funktionalität von 1,7 bis 2,5 während der Reaktion mit den Komponenten B bis E auf eine Funktionalität von größer als 2,5 durch Modifizietungsreaktionen erhöht.

Die Polyisocyanatkomponente A) besteht aus mindestens einem organischen Polyisocyanat. Geeignete Polyisocyanate sind unmodifizierte Polyisocyanate oder den gemachten Angaben bezüglich NCO-Gehalt und -Funktionalität entsprechende Modifizierungsprodukte der an sich bekannten Polyisocyanate, insbesondere Diisocyanate.

Unmodifizierte Polyisocyanate, die als Komponente A) oder als Teil der Komponente A) geeignet sind, sind beispielsweise die Polyisocyanate der Diphenylmethan-Reihe, wie sie neben den entsprechenden Diisocyanaten bei der Phosgenierung von Anilin/Formaldehyd-Kondensaten anfallen oder aber an sich bekannte höherfunktionelle Polyisocyanate wie beispielsweise 4,4',4"-Triisocyanato-triphenylmethan.

Im allgemeinen bestehen die Polyisocyanate der Komponente A) jedoch aus den angesprochenen Modifizierungsprodukten einfacher Polyisocyanate. Unter "Modifizierung" ist in diesem Zusammenhang insbesondere die Herstellung von Biuret-, Allophanat- und/oder Isocyanuratgruppen zu verstehen. Zur Herstellung derartiger Derivate einzusetzende Diisocyanate sind beispielsweise Hexamethylendiisocyanat, Cyclohexan-1,3- und -1,4-Diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Perhydro2,4'- und/oder -4,4'-diphenylmethandiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat.

Besonders bevorzugt werden zur Herstellung der modifizierten Diisocyanate die technisch wichtigen Polyisocyanate verwendet, wie beispielsweise 2,4-Diisocyanatotoluol, dessen technische Gemische mit bis zu 35 Gew.-%, bezogen auf Gemisch, an 2,6-Diisocyanatotoluol, 4,4'-Diisocyanatodiphenylmethan, dessen technischen Gemische mit 2,4'- und 2,2'-Diisocyanatodiphenylmethan, Hexamethylendiisocyanat oder Gemische dieser Diisocyanate. Ganz besonders bevorzugt handelt es sich bei den Polyisocyanaten der Komponente A) um die Isocyanuratgruppen aufweisende Modifizierungsprodukte von 2,4-Diisocyanatotoluol oder dessen technische Gemische mit bis zu 35 Gew.-%, bezogen auf Gemisch, an 2,6-Diisocyanatotoluol. Diese besonders bevorzugten Isocyanuratgruppen aufweisenden Polyisocyanate weisen i.a. einen NCO-Gehalt von 7 bis 30 Gew.-% bei einer NCO-Funktionalität von 3 bis 6 auf. Oftmals wird die Polyisocyanatkomponente A) in Form einer Lösung in einem inerten Lösungsmittel wie beispielsweise Butylacetat eingesetzt.

In einer bevorzugten Ausführungsform werden Polyisocyanate mit einer mittleren Funktionalität von 1,7 bis 2,5 als Komponente A) verwendet, wobei die Modifizierungsreaktionen, d.h. die Bildung von Biuret-, Allophanat- und/oder Isocyanuratgruppen parallel mit bzw. nach der Umsetzung mit den Komponenten B) bis E) erfolgt. Derartige Modifizierungsreaktionen sind dem Fachmann bekannt und z.B. in Houben-Weyl "Methoden der organischen Chemie", Band E20, "Makromolekulare Stoffe" herg. H. Bartl, J. Falbe, G. Thieme Verlag Stuttgart 1987 auf den Seiten 1735, 1736 und 1739 bis 1744 beschrieben.

Die einwertige Alkoholkomponente B) besteht aus mindestens einem einwertigen Alkohol mit einem (aus dem Hydroxylgruppengehalt errechenbaren) Molekulargewicht von 150 bis 10.000, insbesondere 150 bis 5.000, vorzugsweise 500 bis 3.000 g/mol, der 40 bis 99,5, vorzugsweise 70 bis 99,5 Gew.-%, bezogen auf das Gesamtgewicht des einwertigen Alkohols, an innerhalb einer Polyetherkette eingebauten Ethylenoxideinheiten aufweist.

Als Komponente B) oder als Teil der Komponente B) bevorzugt geeignet sind an sich bekannte Alkoxylierungsprodukte von einwertigen Startermolekülen, die pro Molekül im statistischen Mittel mindestens 3, vorzugsweise 7 bis 250 Alkylenoxideinheiten aufweisen, die ihrerseits zu mindestens 40 Gew.-%, vorzugsweise 70 bis 100 Gew.-% aus Ethylenoxideinheiten, bezogen auf die Alkylenoxideinheit, bestehen.

Zur Herstellung der einwertigen Polyetheralkohole geeignete Startermoleküle sind insbesondere einwertige Alkohole, Phenole oder Carbonsäuren. Die Startermoleküle weisen im allgemeinen 1 bis 30, vorzugsweise 1 bis 10 und besonders bevorzugt 1 bis 4 Kohlenstoffatome auf. Beispielhaft genannt seien Alkohole wie Methanol, Ethanol, i-Propanol, n-Butanol, 1-Pentanol, 1-Hexanol, 1-Octanol, Oleylalkohol oder Benzylalkohol oder Phenole wie beispielsweise Phenol, Kresole, Methylphenole, Nonylphenole oder Dodecylphenole oder alkoxylierbare Säuren wie beispielsweise Essigsäure, Buttersäure, Caprin, Laurin, Palmitin oder Stearinsäure oder auch Cyclohexancarbonsäure. Die bevorzugten Startermoleküle sind einwertige Alkohole mit 1 bis 4 Kohlenstoffatomen der oben beispielhaft genannten Art.

Zur an sich bekannten Alkoxylierungsreaktion werden Ethylenoxid oder Kombinationen aus Ethylenoxid mit bis zu 60, vorzugsweise bis zu 30 Gew.-%, bezogen auf die Gesamtmenge der Alkylenoxide, an anderen Alkylenoxiden wie insbesondere Propylenoxid verwendet. Falls außer Ethylenoxid auch andere Alkylenoxide mitverwendet werden, kann dies unter Verwendung entsprechender Alkylenoxidgemische oder auch unter sukzessiver Addition der Alkylenoxide unter Blockbildung erfolgen.

Die Komponente B) kommt in einer Menge von 5 bis 100, vorzugsweise 50 bis 90 Äquivalent-%, bezogen auf die Isocyanatgruppen der Komponente A) zum Einsatz.

Die gegebenenfalls mitzuverwendende Komponente C) besteht aus mindestens einer anderen, den unter B) gemachten Ausführungen nicht entsprechenden einwertigen Verbindung mit einer gegenüber Isocyanat reaktiven Gruppe. In Betracht kommen insbesondere die bekannten einwertigen Alkohole wie z.B. Methanol, Ethanol, Propanol, iso-Propanol, 1- und 2-Butanol, Isobutanol, 1-Hexanol, 2-Ethyl-1-hexanol etc., darüberhinaus einwertige Esteralkohole des Molekulargewichtsbereiches 94 bis 350 wie beispielsweise Hydroxybuttersäuremethylester, Ethylenglykolmonoa-cetat, Milchsäurepropylester oder $\omega$-Hydroxycapronsäureethylester oder einwertige Alkohole des Molekulargewichtsbereiches 146 bis 2.000 g/mol, die durch an sich bekannte Anlagerung von $\varepsilon$-Caprolacton an einwertige Alkohole der bereits oben beispielhaft genannten Art erhalten worden sind.

Die Komponente C wird in einer Menge vorzugsweise bis zu 10 Äquivalent-%, bezogen auf die Isocyanatgruppen der Komponente A, verwendet.

Bei der Komponente D) handelt es sich um organische Verbindungen, die neben mindestens einer tert.-Aminogruppe eine gegenüber Isocyanatgruppen im Sinne der Isocyanat-Additionsreaktion reaktionsfähige Gruppe, insbesondere Hydroxyl- oder Aminogruppe aufweisen. Diese Verbindungen haben im allgemeinen ein Molekulargewicht von 88 bis 250, insbesondere von 88 bis 150 g/mol.

Als Komponente D) bzw. als Teil der Komponente D) kommen beispielsweise Aminoalkohole wie N,N-Diethylethanolamin, N,N-Dimethylethanolamin, N,N-Dimethylisopropanolamin, N,N-Dimethyl-1,3-propandiamin, N,N-Diethylethylendiamin, 2-Dibutylamino-ethanol, 3-(Dimethylamino)-1-propanol, 1-Methylpiperazin, 1-Methyl-4-piperidinol, 2-Morpholinoethanol, 2-Piperidinoethanol, 2-Piperazinoethanol, 2-Piperazinoethylamin, 3-Morpholinopropylamin, N,N-Dibutyl-trimethylendiamin, 3-(Diethylamino)-1-propanol, N-Methyl-3-pyrrolidinol, 2-(Hydroxymethyl)-N-methylpiperidin oder mindestens eine tert.-Aminogruppe und eine primäre oder sekundäre Aminogruppe aufweisende Polyamine in Betracht. Beispiele derartiger Verbindungen sind N,N-Dimethyl-ethylendiamin, N,N-Diethyl-1,4-butandiamin oder N-Methyl-piperazin.

Zu den bevorzugten Verbindungen, die als Komponente D) bzw. als Teil der Komponente D) zum Einsatz gelangen, gehören 4-(2-Hydroxyethyl)-pyridin, 2-Hydroxyethylmorpholin, N,N-Dimethyl-1,3-propandiamin, N,N-Diethyl-1,4-butandiamin und N,N-Dimethylaminoethanol und N,N-Dimethylaminopropylamin.

Die Komponente D) kommt in einer Menge von 0 bis 50, vorzugsweise 10 bis 50 Äquivalent-%, bezogen auf die Isocyanatgruppe der Komponente A) zum Einsatz. Vorzugsweise wird die Komponente D) in einer solchen Menge mitverwendet, daß in den erfindungswesentlichen Additionsprodukten 0 bis 200 und insbesondere 0 bis 100 Milliäquivalente an tert.-Aminogruppen pro 100 g Feststoff vorliegen.

Bei der gegebenenfalls mitzuverwendenden Komponente E) handelt es sich um organische Verbindungen des Molekulargewichtsbereiches 32 bis 3.000, vorzugsweise 118 bis 2.000 g/mol mit zwei gegenüber Isocyanatgruppen reaktionsfähigen Gruppen, insbesondere mit zwei alkoholischen Hydroxylgruppen. Beispielhaft genannt seien insbesondere Polyester- oder Polyetherdiole der an sich bekannten Art des genannten Molekulargewichtsbereiches.

Die Komponente E) wird bei der Herstellung der erfindungswesentlichen Additionsverbindungen, falls überhaupt, in einer Menge von bis zu 20, vorzugsweise bis zu 10 Äquivalent-%, bezogen auf die Isocyanatgruppen der Komponente A) eingesetzt. Besonders bevorzugt wird ohne Mitverwendung der Komponente E) gearbeitet.

Bevorzugte erfindungsgemäße Pigmentpräparationen sind dadurch gekennzeichnet, daß das Polyisocyanat-Additionsprodukt der Komponente c) unter Einhaltung einer NCO-Kennzahl von 100 bis 130 durch Umsetzung von

A) einer Polyisocyanat-Komponente einer mittleren NCO-Funktionalität von 3,0 bis 6 und einem NCO-Gehalt von 7 bis 30 Gew.-%, bestehend aus Isocyanuratgruppen aufweisenden Modifizierungsprodukten von 2,4-Diisocyanatotoluol oder dessen Gemische mit bis zu 35 Gew.-%, bezogen auf das Gemisch, an 2,4-Diisocyanatotoluol, mit

B) 50 bis 90 Äquivalent-%, bezogen auf die Komponente A), einer Alkoholkomponente der unter B) genannten Art,

C) 0 bis 20 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, und

D) 10 bis 50 Äquivalent-%, bezogen auf die Komponente A), einer Aminkomponente der unter D) genannten Art unter Urethanbildung und gegebenenfalls gleichzeitig oder im Anschluß an die Urethanbildung durchgeführte Sekundärreaktionen zur Verminderung von gegebenenfalls vorliegenden überschüssigen NCO-Gruppen bis auf einen Restgehalt von maximal 1,0 Gew.-% erhältlich ist, wobei die Art und Mengenverhältnisse der Ausgangskomponenten so gewählt werden, daß das Umsetzungsprodukt 40 bis 75 Gew.-% an über die Komponente B) eingebauten Ethylenoxideinheiten aufweist.

Ebenfalls bevorzugte erfindungsgemäße Pigmentpräparationen sind dadurch gekennzeichnet, daß das Polyisocyanat-Additionsprodukt der Komponente c) unter Einhaltung einer NCO-Kennzahl von 131 bis 600 durch Umsetzung von

A) einer Polyisocyanat-Komponente mit einer mittleren NCO-Funktionalität von 1,7 bis 2,5 und einem NCO-Gehalt von 30 bis 65 Gew.-%, bestehend aus mindestens einem Isocyanurat aus der folgenden Gruppe: 2,4-Diisocyanatotoluol, 2,6-Diisocyanatotoluol, 4,4'-Diisocyanatodiphenylmethan, 2,4'-Diisocyanatodiphenylmethan mit

B) 5 bis 50 Äquivalent-%, bezogen auf die Komponente A), einer Alkoholkomponente der unter B) genannten Art,

C) 0 bis 10 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, und

D) 0 bis 20 Äquivalent-%, bezogen auf die Komponente A), einer Aminkomponente der unter D) genannten Art

unter Urethanbildung und gegebenenfalls gleichzeitig oder im Anschluß an die Urethanbildung durchgeführte Sekundärreaktionen zur Verminderung von gegebenenfalls vorliegenden überschüssigen NCO-Gruppen bis auf einen Restgehalt von maximal 1,0 Gew.-% erhältlich ist, wobei die Art und Mengenverhältnisse der Ausgangskomponenten so gewählt werden, daß das Umsetzungsprodukt 40 bis 75 Gew.-% an über die Komponente B) eingebauten Ethylenoxideinheiten aufweist.

Bei der Herstellung der erfindungswesentlichen Additionsprodukte aus den beispielhaft genannten Ausgangsmaterialien A) bis E) kann nach unterschiedlichen Methoden gearbeitet werden. Im allgemeinen erfolgt die Umsetzung in der Schmelze bei Temperaturen von 20 bis 250, vorzugsweise 60 bis 140°C. Hierbei kann man beispielsweise so vorgehen, daß man die Isocyanatkomponente A) mit einem Gemisch der Komponente B) und gegebenenfalls C), D) und/oder E) umsetzt oder aber zunächst aus der Komponente A) und einem Teil der Reaktionspartner B) bis E) ein NCO-Prepolymer herstellt, welches anschließend in einer 2. Stufe mit dem Rest der Reaktionspartner mit gegenüber Isocyanatgruppen reaktionsfähigen Gruppen zu Reaktion gebracht wird.

Danach wird der NCO-Überschuß durch Sekundärreaktionen bis auf einen Restgehalt von maximal 1,0 Gew.-%, vorzugsweise von 0,5 Gew.-% und besonders bevorzugt 0 Gew.-% reduziert. Bei diesen Sekundärreaktionen kann es sich beispielsweise um die Bildung von Allophanatgruppen, Biuretgruppen, Uretdiongruppen oder von Isocyanuratgruppen durch entsprechende Additions- bzw. Polymerisationsreaktionen der überschüssigen NCO-Gruppen handeln. Derartige Reaktionen werden oftmals von den vorliegenden tert.-Stickstoffatomen katalysiert und durch 0,1 bis 24-stündiges Erhitzen auf 60 bis 250°C bewirkt. Bevorzugt als Sekundärreaktionen sind Polymerisationsreaktionen bei denen Uretdiongruppen und/oder Isocyanuratgruppen entstehen.

Besonders bevorzugt als Sekundärreaktionen ist die Polymerisation der restlichen NCO-Gruppen unter Ausbildung von Isocyanuratstrukturen, die sich unter Katalyse der gegebenenfalls aus der Komponente D) stammenden tert.-Stickstoffatomen ausbilden oder durch Zugabe von weiteren Trimerisierungskatalysatoren entstehen.

Geeignete Trimerisierungskatalysatoren zur Trimerisierung der überschüssigen NCO-Gruppen bei dem erfindungsgemäßen Verfahren sind alle bislang zur Herstellung von Isocyanuratpolyisocyanaten eingesetzten Verbindungen. Zu nennen sind dabei Oxide, wie z.B. Lithiumoxid oder Bis-[tributylzinn]-oxid; Alkanolate wie, z.B. Natriummethanolat oder Kalium-tert.-butanolat; Phenolate, Hydride, wie z.B. Natriumboranat; Hydroxide, wie z.B. Quartäre Ammonium-, Phosphonium-, Arsonium-, Stibonium-hydroxide oder Kaliumhydroxid/Kronenether; Amine, wie z.B. Triethylamin, Benzyl-dimethylamin, Mannichbasen von Phenolen, Pyrazine oder 1-(2-Hydroxyethyl)-aziridin; Amide, wie z.B. Acrylamide und Carbamidsäureester; Aminimide, wie z.B. N,N-Dimethyl-N-(2-hydroxypropyl)-laurinimid; Phosphane, wie z.B. tert.-Phosphane; Carboxylate, wie z.B. Natriumformiat; Kaliumacetat oder Tetraethylammonium-2-ethylhexanoat; Borate; metallorganische Verbindungen; Metallchelate; Säuren bzw. Lewissäuren, wie z.B. Chlorwasserstoff, Aluminiumchlorid; Friedel-Crafts-Katalysatoren oder Tetramethylammonium-dibutylphosphat. Ferner sind eine Reihe von Stoffkombinationen, die je für sich allein nur wenig oder nicht wirksam sind, gute Trimerisierungskatalysatoren, wie z.B. Tetramethylammoniumiodid/(Phenoxymethyl)-oxiran, 1,4-Diaza-bicyclo[2,2,2]octan/(Phenoxymethyl)-oxiran oder Cyclohexyl-dimethylamin/Tetramethylammonium-2-ethylhexanoat. Eine ausführliche Übersicht über Katalysatoren für die Trimerisierung von Isocyanatgruppen mit entsprechenden Hinweisen auf die Originalliteratur ist zu finden in Houben-Weyl, Methoden zur organischen Chemie, Band E, 20 (1987), Seiten 1741-1751, Georg Thieme Verlag Stuttgart, New York.

Obwohl die Reaktion, von den geringen Lösungsmitteln, die gegebenenfalls zum Auflösen der Komponente A) eingesetzt werden, abgesehen, vorzugsweise in der Schmelze durchführbar wird, ist es auch möglich, beispielsweise zur Erniedrigung der Viskosität inerte Lösungsmittel mitzuverwenden. Geeignete Lösungsmittel sind beispielsweise Dimethylformamid, N-Methylpyrrolidon, Dimethylacetamid, Aceton, 2-Butanon, Essigsäureethylester, Essigsäurebutylester, Methoxypropylacetat, Toluol oder Gemische derartiger Lösungsmittel. Im allgemeinen werden die Lösungsmittel im Verlauf oder im Anschluß an die Umsetzung, beispielsweise durch Destillation, entfernt.

Gegebenenfalls können auch an sich bekannte, die Isocyanat-Additionsreaktion beschleunigende, Katalysatoren mitverwendet werden. Beispielhaft genannt seien Triethylamin, N,N-Dimethylbenzylamin oder Zinnverbindungen wie beispielsweise Zinn(II)octoat oder Dibutylzinndilaurat.

In einer bevorzugten Ausführungsform enthalten die erfindungsgemäßen Pigmentpräparationen

a) 5 bis 80 Gew.-%, insbesondere 10 bis 60 Gew.-% Pigment,

b) 5 bis 90 Gew.-%, insbesondere 5 bis 80 Gew.-% eines Monohydroxyethers, Polyetherpolyols oder Polyesterpolyols oder Gemische davon und

c) 0,5 bis 20 Gew.-%, 1 bis 10 Gew.-%, insbesondere 1-5 Gew.-% des Polyisocyanat-Additionsproduktes, wobei sich die Prozentangaben jeweils auf die Summe der Komponenten a) bis c) beziehen.

Die Pigmente der erfindungsgemäßen Pigmentpräparationen unterliegen keiner Beschränkung. Sie können organischer oder anorganischer Natur sein. Geeignete organische Pigmente sind z.B. solche der Azo-, Anthrachinon-, Thioindigo-Reihe, ferner andere polycyclische Pigmente, z.B. aus der Phthalocyanin-, Chinacridon-, Dioxazin-, Naphthalintetracarbonsäure-, Perylentetracarbonsäure- oder Isoindolin-Reihe sowie Metallkomplex-Pigmente oder verlackte Farbstoffe wie Ca-, Mg-, Al-Lacke von sulfonsäure- und/oder carbonsäuregruppenhaltigen Farbstoffen sowie Ruß, von denen eine große Zahl beispielsweise aus Color Index, 2. Auflage, bekannt ist. Geeignete anorganische Pigmente sind beispielsweise Zinksulfide, Ultramarin, Titandioxide, Eisenoxide, Nickel- oder Chromantimontitandioxid, Cobaltblau, Chromoxide und Chromatpigmente. Vorzugsweise wird Ruß eingesetzt, der im Rahmen dieser Anmeldung auch als Pigment betrachtet wird.

Besonders bevorzugte Pigmente der erfindungsgemäßen Pigmentpräparationen sind beispielsweise Phthalocyaninpigmente, wie Pigment Blue 15, Pigment Green 7, Arylamid-Pigmente wie Pigment Yellow 83, Pigment Yellow 17, Monoazo-Pigmente wie Pigment Red 48, Litholpigmente, Disazokondensationspigmente, wie Pigment Red 166, sowie Ruße, Zinksulfide und Ultramarine. Ganz besonders bevorzugt sind Ruße mit einer BET-Oberfläche von 30 bis 1500 $m^2$/g, insbesondere 30 bis 230 $m^2$/g, insbesondere saure Ruße und alkalische Ruße nach dem Gasruß- oder Fumacerußverfahren, sowie oxidativ oder chemisch nachbehandelte Ruße.

Als Monohydroxyether werden vorzugsweise Monohydroxyalkylether verstanden, insbesondere solche, die sich von Homo-, Co- oder Block-Co-Polyetherpolyolen, welche durch Umsetzung von Ethylenoxid und/oder Propylenoxid mit Wasser oder mit niedermolekularen, polyfunktionellen Alkoholen, die mindestens zwei Hydroxygruppen besitzen, erhalten wurden, ableiten oder die sich von niedermolekularen polyfunktionellen Alkoholen mit wenigstens zwei, vorzugsweise zwei oder mehreren Hydroxygruppen ableiten. Unter polyfunktionellen Alkoholen werden insbesondere aliphatische $C_2$-$C_6$-Alkohole wie beispielsweise Ethylenglykol, 1,2- oder 1,3-Propandiol, 1,2- oder 1,4-Butandiol, 1,6-Hexandiol, Glycerin, Trimethylolpropan oder Pentaerythrit verstanden. Besonders bevorzugt sind Monohydroxyether, insbesondere Monohydroxypolyether. Als Monoalkylether, insbesondere Mono-$C_1$-$C_4$-Alkylether sind bevorzugt solche zu nennen, die sich von Diethylenglykol oder auf Ethylenglykol oder 1,2- oder 1,3-Propandiol gestartete Alkylenoxidaddukte aus Ethylenoxid und/oder Propylenoxid mit einem als Zahlenmittel bestimmten mittleren Molekulargewicht von 62 bis 5000 g/mol ableiten. Bevorzugte Monoalkylhydroxyether sind auf Mono-$C_1$-$C_4$-alkoholen gestarteten Ethylenoxid und/oder Propylenoxid-Polyether, insbesondere die auf Methanol, Ethanol, Isopropanol, n-Propanol, n-, sec-, tert.-Butanol gestarteten Monohydroxyether. Besonders bevorzugt sind Mono-$C_1$-$C_4$-alkylglykolether, insbesondere Monomethyl-, Monoethyl-, Monoisopropyl-, Mono-n-propyl-, Mono-n-butyl-, Mono-sek.-butyl- oder Mono-tert.-butylglykolether ist, ganz besonders bevorzugt Mono(n-butyl)ethylenglykolether oder Mono(n-butyl)diethylenglykolether als Komponente b).

Als Polyether- oder Polyesterpolyole kommen solche infrage, wie sie als Anpastungsmittel bzw. Bindemittel in Pigmentpasten bekannt sind bzw. als Aufbaukomponenten für Polyurethane bekannt sind. Insbesondere kommen infrage Polyester aus Phthalsäure oder Adipinsäure und einem Diol und/oder einem einwertigen Alkohol mit 1 bis 18 C-Atomen, wie sie z.B. aus DE-A 2 905 975 bekannt sind, z.B. Polyethylenglykol und Polypropylenglykol, sowie insbesondere unter Normalbedingungen flüssige, Polyetherpolyole, hergestellt durch Anlagerung von Ethylenoxid und/oder Propylenoxid an ein Polyol (siehe z.B. DE-A 3 115 651).

In einer bevorzugten Ausführungsform beträgt der Anteil des Monohydroxyethers an der Komponente b) 0 bis 80, vorzugsweise 10 bis 50 Gew.-%. In einer bevorzugten Ausführungsform ist die Komponente b) bei Raumtemperatur flüssig.

Bevorzugt sind erfindungsgemäße Präparationen, wobei die drei Komponenten a), b) und c) zusammen vorzugsweise mehr als 80 Gew.-%, insbesondere mehr als 90 Gew.-% der Pigmentpräparationen darstellen.

Bevorzugt ist die Komponente c) in der Komponente b) bei einer Temperatur von 25°C zu mehr als 10 g pro 100 g b) löslich.

Zusätzlich zu den Komponente a) bis c) können die erfindungsgemäßen Pigmentpräparationen weitere, für Pigmentpräparationen übliche Bestandteile enthalten. Als solche seien beispielhaft genannt: Verdünnungsmittel wie Di-/Tributylphosphat, Glykolether, Glycerinether, Stabilisatoren und/oder Konservierungsmittel oder Methoxypropylacetat.

Auch nicht-polyhydroxyfunktionelle Dicarbonsäureester wie $C_1$-$C_4$-Alkylester der Adipinsäure oder der Phthalsäure kommen in Frage.

Weiterhin sind Amine und/oder deren Salze mit einem als Zahlenmittel bestimmten mittleren Molekulargewicht von $\overline{M}_n$ kleiner gleich 500 g/mol.

Die Erfindung betrifft weiterhin ein Verfahren zur Herstellung der erfindungsgemäßen Pigmentpräparationen, das dadurch gekennzeichnet ist, daß man beispielsweise die Komponente c) in der Komponente b) löst und anschließend bei Raumtemperatur die Komponente a) beispielsweise mittels eines schnelllaufenden Rührers oder Dissolvers homogen einmischt und vorzerkleinert.

In einer besonders bevorzugten Ausführungsform wird die Komponente c) als 10 bis 80 %ige Lösung in einem Teil des gewünschten Anpastungsmittels der Komponente b) eingesetzt, welche aufgrund der vorzugsweise flüssigen Form leicht in dem gewünschten Anpastungsmittel eingebracht und auf die erforderliche Konzentration verdünnt werden kann.

Im Anschluß an die Mischung der Komponenten a), b) und c) erfolgt vorzugsweise eine Mahlung auf die gewünschte Pigmentfeinverteilung in kontinuierlicher oder diskontinuierlicher Weise in üblichen Naßzerkleinerungsaggregaten, wie z.B. Kneter, Attritoren, Walzenstühlen, Dissolver, Rotor-Stator-Mühlen, Kugelmühlen und besonders bevorzugt schnellaufenden Rührwerksperlmühlen mit Umlaufgeschwindigkeiten von 5 bis 60 m/s, vorzugsweise 10 bis 20 m/s, die Mahlkörper in der Größe von 0,1 bis 10 mm, vorzugswweise 0,5 bis 2 mm, aus Stahl, Glas, Keramik, Sand oder Kunststoff enthalten.

Erfindungsgemäß ist es auch möglich, die Mahlung mit einer höheren Pigmentkonzentration als die der fertigen Präparation durchzuführen und im Anschluß an die Mahlung durch Zugabe weitere Anteile der Komponente b) sowie gegebenenfalls weiteren Zusätzen auf die gewünschte Endkonzentration einzustellen.

In einer bevorzugten Verfahrensweise erfolgt anstelle oder- im Anschluß an eine Vorzerkleinerung oder Mahlung eine Homogenisierung und Naßzerkleinerung unter Verwendung eines sogenannten Strahldispergators oder Hochdruck-Homogenisators bei Drücken von 10 bis 2500 bar, vorzugsweise 200 bis 2500 bar. Das Verfahren der Strahldispergierung geht beispielsweise aus der noch unveröffentlichten DE-A-19 536 845 hervor. Es können jedoch auch andere Ausführungsformen (sogenannte Hochdruck-Homogenisatoren), wie sie beispielsweise aus der Emulsionsherstellung bekannt sind, und die nach dem Prinzip der Hochdruckentspannung in Verbindung mit Prallzerkleinerung arbeiten, zur Anwendung kommen.

Die Zugabe weiterer Zusätze kann erfindungsgemäß vor oder nach der Pigmentzugabe sowie vor oder nach der Mahlung oder Hochdruckhomogenisierung erfolgen.

Die Erfindung betrifft weiterhin ein Verfahren zum Pigmentieren von organischen, makromolekularem Material, insbesondere von Polyurethan-Schaumstoffen, das dadurch gekennzeichnet ist, daß man die erfindungsgemäßen Präparationen für die Einfärbung solcher Materialien, insbesondere von Polyurethan-Schaumstoffen verwendet. Dabei wird die erfindungsgemäße Präparation beispielsweise vor oder während der Polyurethan-Bildung entweder der Polyol-Komponente oder der Polyisocyanat-Komponente oder deren Reaktionsgemischen zugesetzt. Die weitere Reaktion wird in üblicher Weise, d.h. wie für nicht-pigmentierte Polyurethankunststoffe durchgeführt. Angaben dazu sind beispielsweise G. Oertel, Kunststoff-Handbuch, Bd. 7, Polyurethane, Hansa Verlag München, Wien 1983, Engl. Ausgabe 1985 zu entnehmen.

Die Anfärbung der Polyurethan-Schaumstoffe geschieht vorzugsweise kurz vor der Verschäumung in einem Mischkopf, in dem die Polyole und Polyisocyanate, gegebenenfalls in Gegenwart von Hilfsstoffen mit den erfindungsgemäßen Pigmentpräparationen innig vermischt werden.

Die Erfindung betrifft weiterhin ein Verfahren zum Pigmentieren von Polyurethanschaumstoffen, das dadurch gekennzeichnet ist, daß man eine Pigmentpräparation, enthaltend ein Pigment und das obige Polyisocyanat-Additionsprodukt vor oder während der Polyurethanbildung entweder der Polyol- oder Polyisocyanat Komponente oder deren Reaktionsgemischen zusetzt.

Als mögliche Pigmente sind die geeignet, die oben unter der Komponente a) der erfindungsgemäßen Pigmentpräparationen genannt sind.

Die erfindungsgemäß zu verwendenden Polyisocyanat-Additionsprodukt enthaltenden Pigmentpräparationen können als weitere Zusätze beispielsweise Anpastungsmittel wie die obengenannten nicht-polyhydroxyfunktionellen Dicarbonsäureester enthalten, oder weitere übliche Zusätze, die oben beschrieben sind.

Die erfindungsgemäß zu verwendende Polyisocyanat-Additionsprodukt enthaltende Pigmentpräparation enthält dieses vorzugsweise in einer Menge von 0,5 bis 20, 1-15, insbesondere 1-10 Gew.-%, bezogen auf die Pigmentpräparation.

Auch andere Kunststoffe wie beispielsweise PVC, PS oder PC lassen sich mit den erfindungsgemäßen Pigmentpräparationen pigmentieren.

**Beispiele**

Komponente A:  2,4-Toluylendiisocyanat (Desmodur T 100$^®$ der Bayer AG)

Komponente B:  einwertiger Polyetheralkohol des Molekulargewichts 2250 mit einem Ethylenoxidgehalt von 87,5 Gew.-%, hergestellt durch Alkoxylierung von n-Butanol unter Verwendung eines Gemisches aus Ethylenoxid und Propylenoxid.

Komponente D:  N,N-Dimethylethanolamin

**Beispiel 1**

In einem 1 l-Dreihalskolben mit Rührer, Rückflußkühler und Thermometer wurden 200,0 g der Komponente B) vorgelegt und entwässert. Dann wurden bei 80°C 33,78 g der Komponente A1) zugegeben und so lange bei 80°C gerührt, bis ein NCO-Gehalt von ca. 5,4 % erreicht ist. Danach wurden 3,96 g der Komponente D) zugegeben und 20 Minuten bei 80°C gerührt. Anschließend wurden 0,2 g 2,4,6-Tris-(dimethylaminomethyl)-phenol zugegeben und so lange bei 80°C gerührt, bis im IR-Spektrum keine NCO-Bande mehr zu sehen war. Man erhielt ein Polyisocyanataddditionspro-dukt, das als Dispergiermittel verwendet werden kann.

### Beispiel 2

Die Herstellung der Polyadditionsverbindung erfolgte analog Beispiel 1, jedoch wurde auf die Zugabe von 2,4,6-Tris-(dimethylaminoethyl)-phenol verzichtet und so lange gerührt, bis im IR-Spektrum keine NCO-Bande mehr zu sehen war. Die Reaktionszeit ist im Vergleich zu dem Produkt gemäß Beispiel 1 um ca. 10 % länger.

### Beispiel 3 (Vergleichsbeispiel gemäß Stand der Technik)

Eine schwarze Pigmentpräparation, enthaltend 18 Gew.-% eines alkalischen Farbrußes (Komponente a) mit einer B.E.T.-Oberfläche von 45 $m^2$/g, einer DBP-Adsorption von 45 ml/100 g und einem pH-Wert von 9 sowie 82 Gew.-% eines Adipinsäureesters (Komponente b) wurde mittels eines Dissolvers homogenisiert und im Anschluß in einer schnelllaufenden diskontinuierlichen 1 I-Rührwerksperlmühle (Fabrikat Sussmeyer, Brüssel) mit 2 mm ∅ Glasperlen in einer Zeit von 30 Minuten unter Kühlung gemahlen.

Der eingesetzte Adipinsäureester, der ein Umsetzungsprodukt von Adipinsäure mit 1,2-Propylenglykol ist, besitzt eine OH-Zahl von 167 mg KOH/g, eine Säurezahl von 0,5 mg KOH/g und eine Viskosität von 190 bis 200 mPas bei 50°C.

Die so erhaltene Präparation besitzt eine so hohe Viskosität, daß eine technische Herstellung auf kontinuierlich betriebenen Rührwerksperlmühlen nicht möglich ist.

Die Beurteilung der Farbstärke erfolgte in Polyesterurethanschaumstoff:

Eine Mischung aus 200 g eines Polyesters aus Adipinsäure, Diethylenglykol und Trimethylolpropan mit einer OH-Zahl von 50 und 73,2 g eines Gemisches aus 65 % 2,4- und 35 % 2,6-Toluylendiisocyanat wurde mit 2 g der Pigmentpräparation versetzt und das Gemisch durch den üblichen Zusatz von Wasser und Hilfsmitteln zur Schaumbildung gebracht. Die visuell ermittelte Farbstärke wurde zu 100 % gesetzt und diente dem Vergleich mit den folgenden Beispielen.

Die Ergebnisse der Farbstärkeprüfung sowie Fließeigenschaften und Viskositätswerte bei 23°C der Präparation gehen aus Vergleichstabelle 1 hervor.

### Beispiel 4

Nach dem gleichen Verfahren wie in Beispiel 3 beschrieben, wurde eine schwarze Pigmentpräparation hergestellt, enthaltend 30 Gew.-% eines sauren Farbrußes (Komponente a), mit einer B.E.T.-Oberfläche von 96 $m^2$/g, einer DBP (Dibutylphthalat). Adsorption von 69 ml/100 g und einem pH-Wert von 2.5, 65,7 Gew.-% Diethylenglykolmonobutylether (Komponente b) und 4,3 Gew.-% des Polyisocyanat-Additionsproduktes gemäß Beispiel 1 (Komponente c). Man erhielt nach der Mahlung eine sehr gut fließende Paste mit sehr niedriger Viskosität und hoher Farbstärke.

### Beispiel 5

Nach dem gleichen Verfahren wie in Beispiel 3 beschrieben wurde eine schwarze Pigmentpräparation hergestellt, enthaltend 30 Gew.-% des gleichen sauren Farbrußes wie in Beispiel 4 (Komponente a), 65,7 Gew.-% einer Mischung aus 54,3 Gew.-% Diethylenglykolmonobutylether und 45,7 Gew.-% des gleichen Adipinsäureesters aus Beispiel 3 (Komponente b) und 4,3 Gew.-% des Polyisocyanat-Additionsproduktes gemäß Beispiel 1 (Komponente c). Man erhielt nach der Mahlung eine gut fließende Paste mit mittlerer Viskosität und hoher Farbstärke.

Vergleichstabelle 1

| Beispiel | Viskosität D = 7 s$^{-1}$ T = 23°C (mPas) | Fließverhalten | Farbstärke in Polyesterurethanschaum (%) |
|---|---|---|---|
| 3 | ca. 19.000 | thixotrop zäh fließend | 100 |
| 4 | 163 | sehr gut fließend | 170 - 180 |
| 5 | 3.990 | leicht thixotrop gut fließend | 180 |

Ähnlich gute Ergebnisse wurden erhalten, als anstatt dem Polyisocyanat-Additionsprodukt aus Beispiel 1 in den Beispielen 4 und 5 das aus Beispiel 2 verwendet wurden.

**Beispiel 6**

Eine rote Pigmentpräparation enthaltend 50 Gew.-% eines anorganischen Rotpigmentes Color Index Pigment Rot 101 (Komponente a), 48 Gew.-% des gleichen Adipinsäureesters wie in Beispiel 3 (Komponente b) und 2,0 Gew.-% des Polyisocyanat-Additionsproduktes wie in Beispiel 1 beschrieben (Komponente c), wurden mittels eines Dissolvers bei einer Drehzahl von 4.000 min$^{-1}$ in einer Zeit von 15 Minuten bei einer Temperatur von ca. 40°C vollständig homogenisiert. Die so erhaltene Präparation besaß sowohl in Polyester- als auch Polyetherurethanschaumstoffen eine gute Farbstarke und war im Vergleich zu einer Präparation ohne Dispergiermittel (c), jedoch gleichem Pigmentgehalt, besser fließend und in kontinuierlichen Verschäumungsprozessen gut einsetzbar. Das gleiche Ergebnis wurde erhalten, als die in Beispiel 2 beschriebene Komponente c) eingesetzt wurde.

**Beispiel 7**

Eine rote Pigmentpräparation, enthaltend 15 Gew.-% des Monoazopigmentes Color Index Pigment Rot 48:3 (Komponente a), 83 Gew.-% des Adipinsäureesters aus Beispiel 3 (Komponente b) und 2,0 Gew.-% des Polyisocyanat-Additionsproduktes wie in Beispiel 1 beschrieben (Komponente c) wurde mittels eines Dissolvers homogenisiert und wie in Beispiel 4 beschrieben gemahlen.

Im Vergleich zu einer ebenso hergestellten Pigmentpräparation, bestehend aus 15 Gew.-% des gleichen Farbpigmentes und 85 Gew.-% des gleichen Adipinsäureesters ergab sich eine bessere Fließfähigkeit und deutlich niedrigere Viskosität von 8021 mPas gegenüber 10.750 mPas der Vergleichspräparation (gemessen bei 23°C und einem Schergefälle von 7 s$^{-1}$). Die Farbstärke ist in Polyesterurethanschaum höher als der Vergleich. Das gleiche Ergebnis wurde erhalten, als die in Beispiel 2 beschriebene Komponente c) eingesetzt wurde.

**Beispiel 8**

Eine blaue Pigmentpräparation, enthaltend 17,5 Gew.-% des Kupfer-Phthalocyaninpigmentes Color Index Pigment Blau 15:3 (Komponente a), 80,5 Gew.-% des Adipinsäureesters aus Beispiel 3 (Komponente b) und 2,0 Gew.-% des Polyisocyanat-Additionsproduktes aus Beispiel 1 (Komponente c) wurden mittels eines Dissolvers homogenisiert und wie in Beispiel 4 beschrieben gemahlen.

Die erhaltene Präparation besaß eine ausreichende Fließfähigkeit sowie eine Viskosität von ca. 11.000 mPas (gemessen bei 23°C und einem Schergefälle von 7 s$^{-1}$) und erreichte eine hohe Farbstärke in Polyesterurethanschaumstoffe. Das gleiche Ergebnis wurde erhalten, als die in Beispiel 2 beschriebene Komponente c) eingesetzt wurde.

**Patentansprüche**

1. Pigmentpräparationen, enthaltend wenigstens

   a) ein Pigment,

   b) einen Monohydroxyether, Polyether- oder Polyesterpolyol oder Gemische davon

   c) ein Polyetherketten aufweisendes Polyisocyanat-Additionsprodukt mit einem Gehalt an Isocyanatgruppen von maximal 1,0 Gew.-% und einen Gehalt an über monofunktionelle Alkohole B) eingebauten, innerhalb von Polyetherketten angeordneten Ethylenoxideinheiten (Mol-Gew. = 44 g/mol) von 30 bis 95 Gew.-%, das durch Umsetzung von

A) einer Polyisocyanat-Komponente, einer (mittleren) NCO-Funktionalität von 1,7 bis 6 und einem NCO-Gehalt von 5 bis 65 Gew.-% mit mindestens einer der folgenden Komponenten

B) 5 bis 100 Äquivalent-%, bezogen auf die Isocyanatgruppen von A), einer einwertigen Alkoholkomponente, bestehend aus mindestens einem einwertigen Polyetheralkohol des Molekulargewichtsbereiches 150 bis 10.000 g/mol mit einem Gehalt an Ethylenoxideinheiten von 40 bis 99,5 Gew.-%, der durch Alkoxylierung eines einwertigen Startermoleküls hergestellt worden ist,

C) 0 bis 20 Äquivalent-%, bezogen auf die Isocyanatgruppen von A), einer einwertigen Komponente, bestehend aus mindestens einer, von den Alkoholen der Gruppe B) verschiedenen primäre oder eine gegenüber Isocyanat reaktive Gruppe aufweisenden Verbindung des Molekulargewichtsbereiches 32 bis 5.000 g/mol,

D) 0 bis 50 Äquivalent-%, bezogen auf die Isocyanatgruppen von A), einer Aminokomponente, bestehend aus mindestens einem tertiären Amin des Molekulargewichtsbereiches 88 bis 250 g/mol mit einer gegenüber Isocyanatgruppen im Sinne der NCO-Additionsreaktion reaktionsfähigen Gruppe und

E) 0 bis 20 Äquivalent-%, bezogen auf die Isocyanatgruppen von A), an im Sinne der NCO-Additionsreaktion mindestens difunktionellen Aufbaukomponenten des Molekulargewichtsbereiches 32 bis 3.000 g/mol

unter Einhaltung einer NCO-Kennzahl von 100 bis 600 unter Urethan- und gegebenenfalls Harnstoffbildung erhältlich ist, wobei gegebenenfalls im Überschuß vorliegende NCO-Gruppen durch gleichzeitig oder anschließend erfolgende Sekundärreaktionen bis auf einen Restgehalt von maximal 1,0 Gew.-% abreagiert sind.

2. Pigmentpräparation gemäß Anspruch 1, dadurch gekennzeichnet, daß das Polyisocyanat-Additionsprodukt unter Einhaltung einer NCO-Kennzahl von 100 bis 130 durch Umsetzung von

A) einer Polyisocyanat-Komponente einer mittleren NCO-Funktionalität von 3,0 bis 6 und einem NCO-Gehalt von 7 bis 30 Gew.-%, bestehend aus Isocyanuratgruppen aufweisenden Modifizierungsprodukten von 2,4-Diisocyanatotoluol oder dessen Gemische mit bis zu 35 Gew.-%, bezogen auf das Gemisch, an 2,4-Diisocyanatotoluol, mit

B) 50 bis 90 Äquivalent-%, bezogen auf die Komponente A), einer Alkoholkomponente der unter B) in Anspruch 1 genannten Art,

C) 0 bis 20 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, und

D) 10 bis 50 Äquivalent-%, bezogen auf die Komponente A), einer Aminkomponente der unter D) in A1 genannten Art

unter Urethanbildung und gegebenenfalls gleichzeitig oder im Anschluß an die Urethanbildung durchgeführte Sekundärreaktionen zur Verminderung von gegebenenfalls vorliegenden überschüssigen NCO-Gruppen bis auf einen Restgehalt von maximal 1,0 Gew.-% erhältlich ist, wobei die Art und Mengenverhältnisse der Ausgangskomponenten so gewählt werden, daß das Umsetzungsprodukt 40 bis 75 Gew.-% an über die Komponente B) eingebauten Ethylenoxideinheiten aufweist.

3. Pigmentpräparationen gemäß Anspruch 1, dadurch gekennzeichnet, daß das Polyisocyanat-Additionsprodukt der Komponente C) unter Einhaltung einer NCO-Kennzahl von 131 bis 600 durch Umsetzung von

A) einer Polyisocyanat-Komponente mit einer mittleren NCO-Funktionalität von 1,7 bis 2,5 und einem NCO-Gehalt von 30 bis 65 Gew.-%, bestehend aus mindestens einem Isocyanurat aus der folgenden Gruppe: 2,4-Diisocyanatotoluol, 2,6-Diisocyanatotoluol, 4,4'-Diisocyanatodiphenylmethan, 2,4'-Diisocyanatodiphenylmethan

mit

B) 5 bis 50 Äquivalent-%, bezogen auf die Komponente A), einer Alkoholkomponente der unter B) in A1 genannten Art,

C) 0 bis 10 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, und

D) 0 bis 20 Äquivalent-%, bezogen auf die Komponente A), einer Aminkomponente der unter D) in A1 genannten Art

unter Urethanbildung und gegebenenfalls gleichzeitig oder im Anschluß an die Urethanbildung durchgeführte Sekundärreaktionen zur Verminderung von gegebenenfalls vorliegenden überschüssigen NCO-Gruppen bis auf einen Restgehalt von maximal 1,0 Gew.-% erhältlich ist, wobei die Art und Mengenverhältnisse der Ausgangskomponenten so gewählt werden, daß das Umsetzungsprodukt 40 bis 75 Gew.-% an über die Komponente B) eingebauten Ethylenoxideinheiten aufweist.

4. Pigmentpräparationen gemäß Anspruch 1, enthaltend

a) 5 bis 80 Gew.-%, insbesondere 10 bis 60 Gew.-% Pigment,

b) 5 bis 90 Gew.-%, insbesondere 5 bis 80 Gew.-% eines Monohydroxyethers, Polyetherpolyols oder Polyesterpolyols oder Gemische davon und

c) 0,5 bis 20 Gew.-%, insbesondere 1 bis 10 Gew.-% des Polyisocyanat-Additionsproduktes.

5. Pigmentpräparationen gemaß Anspruch 1, dadurch gekennzeichnet, daß sie mindestens ein Pigment aus der Gruppe der Azo-, Anthrachinon-, Thioindigo-Reihe, polycyclische Pigmente wie Phthalocyanin-, Naphthalintetracarbonsäure-, Chinacridon, Perylentetracarbonsäure- oder Isoindolin-Pigmente, Metallkomplex-Pigmente, verlackte Farbstoffe wie Ca-, Mg-, Al-Lacke von Sulfonsäure- und/oder Carbonsäure-haltigen Farbstoffe, anorganische Pigmente oder Ruß, insbesondere Ruß enthalten.

6. Pigmentpräparationen gemäß Anspruch 1, dadurch gekennzeichnet, daß als Monohydroxyether der Komponente b) ein Monohydroxyalkylether eingesetzt wird, der sich von Homo-, Co- oder Block-Co-Polyetherpolyolen, welche durch Umsetzung von Ethylenoxid und/oder Propylenoxid mit Wasser oder mit niedermolekularen polyfunktionellen Alkoholen, welche mindestens zwei Hydroxylgruppen besitzen, erhalten wurden, ableiten oder die sich von niedermolekularen polyfunktionellen Alkoholen mit wenigstens zwei Hydroxylgruppen ableiten.

7. Pigmentpräparationen gemäß Anspruch 1, dadurch gekennzeichnet, daß der Monohydroxyether der Komponente b) ein Mono-$C_1$-$C_4$-alkylglykolether, insbesondere Mono-methyl-, -ethyl-, -isopropyl-, -n-propyl-, -n-butyl-, - sek.-butyl- oder tert.-butyl-glykolether ist, insbesondere Mono-n-butylethylenglykolether oder Mono-n-butyldiethylenglykolether ist.

8. Verfahren zur Herstellung von Pigmentpräparationen gemäß Anspruch 1, dadurch gekennzeichnet, daß man die Komponenten a), b) und c) in einem Naßzerkleinerungsaggregat homogenisiert und mahlt.

9. Verfahren gemäß Anspruch 8, dadurch gekennzeichnet, daß als Naßzerkleinerungsaggregat ein Strahldispergator oder Hochdruckhomogenisator mit Arbeitsdrücken von 10 bis 2500 bar verwendet wird.

10. Verfahren zum Pigmentieren von organischen makromolekularem Material, dadurch gekennzeichnet, daß man Pigmentpräparationen gemäß Anspruch 1 verwendet.

11. Verfahren gemäß Anspruch 10 zum Massefarben von Kunststoffen, dadurch gekennzeichnet, daß Pigmentpräparationen gemäß Anspruch 1 in die geschmolzene Kunststoffmasse eingearbeitet oder den Ausgangskomponenten zur Herstellung des Kunststoffs vor der Polymerisation zugesetzt werden.

**12.** Verfahren gemäß Anspruch 10 zum Pigmentieren von Polyurethanen, dadurch gekennzeichnet, daß man die Pigmentpräparationen gemäß Anspruch 1 vor oder während der Polyurethan-Bildung entweder der Polyol-Komponente oder Polyisocyanat-Komponente oder deren Reaktionsgemisch zusetzt.

**13.** Kunststoffe, insbesondere Polyurethane, pigmentiert mit der Pigmentpräparation gemäß Anspruch 1.

**14.** Verwendung eines Polyetherketten aufweisendes Polyisocyanat-Additionsproduktes mit einem Gehalt an Isocyanatgruppen von maximal 1,0 Gew.-% und einen Gehalt an über monofunktionelle Alkohole B) eingebauten, innerhalb von Polyetherketten angeordneten Ethylenoxideinheiten (Mol-Gew. = 44 g/mol) von 30 bis 95 Gew.-%, das durch Umsetzung von

A) einer Polyisocyanat-Komponente, einer (mittleren) NCO-Funktionalität von 1,7 bis 6 und einem NCO-Gehalt von 5 bis 65 Gew.-% mit mindestens einer der folgenden Komponenten

B) 5 bis 100 Äquivalent-%, bezogen auf die Isocyanatgruppen von A), einer einwertigen Alkoholkomponente, bestehend aus mindestens einem einwertigen Polyetheralkohol des Molekulargewichtsbereiches 150 bis 10.000, vorzugsweise 150 bis 5.000 g/mol mit einem Gehalt an Ethylenoxideinheiten von 40 bis 99,5 Gew.-%, der durch Alkoxylierung eines einwertigen Startermoleküls hergestellt worden ist,

C) 0 bis 20 Äquivalent-%, bezogen auf die Isocyanatgruppen von A), einer einwertigen Komponente, bestehend aus mindestens einer, von den Alkoholen der Gruppe B) verschiedenen primäre oder eine gegenüber Isocyanat reaktive Gruppe aufweisenden Verbindung des Molekulargewichtsbereiches 32 bis 5.000 g/mol,

D) 0 bis 50 Äquivalent-%, bezogen auf die Isocyanatgruppen von A), einer Aminokomponente, bestehend aus mindestens einem tertiären Amin des Molekulargewichtsbereiches 88 bis 250 g/mol mit einer gegenüber Isocyanatgruppen im Sinne der NCO-Additionsreaktion reaktionsfähigen Gruppe
und

E) 0 bis 20 Äquivalent-%, bezogen auf die Isocyanatgruppen von A), an im Sinne der NCO-Additionsreaktion mindestens difunktionellen Aufbaukomponenten des Molekulargewichtsbereiches 32 bis 3.000 g/mol
unter Einhaltung einer NCO-Kennzahl von 100 bis 600 unter Urethan- und gegebenenfalls Harnstoffbildung erhältlich ist, wobei gegebenenfalls im Überschuß vorliegende NCO-Gruppen durch gleichzeitig oder anschließend erfolgende Sekundärreaktionen bis auf einen Restgehalt von maximal 1,0 Gew.-% abreagiert sind,

enthaltender Pigmentpräparationen zum Pigmentieren von Polyurethanschäumen.

# EP 0 829 496 A1

**Europäisches Patentamt**

**EUROPÄISCHER RECHERCHENBERICHT**

Nummer der Anmeldung

EP 97 11 4979

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,A | EP 0 764 701 A (BAYER AG)<br><br>* Ansprüche 1-5,7-14; Beispiel 3 *<br>--- | 1-8,<br>10-14 | C08G18/10<br>C09D17/00<br>C08K3/00 |
| P,A | EP 0 749 994 A (BAYER AG)<br>* Seite 6, Zeile 7 - Zeile 14; Ansprüche 1-3,5-7 *<br>--- | 1-3,5-7 | |
| A | EP 0 335 197 A (BAYER AG)<br>* Seite 8, Zeile 15 - Zeile 25; Ansprüche 1,6 *<br>--- | 1-7 | |
| A | US 4 166 163 A (E.P.DIBELLA ET AL.)<br><br>* Ansprüche 1,5; Beispiel 1 *<br>--- | 1,4,<br>10-14 | |
| A | FR 2 241 597 A (ICI LTD.)<br>* Ansprüche 1,2,4,9,10,12 *<br>----- | 1,4-6 | |

**RECHERCHIERTE SACHGEBIETE (Int.Cl.6)**

C08G
C09D
C08K

Der vorliegende Recherchenbericht wurde für alle Patentansprüche erstellt

| Recherchenort | Abschlußdatum der Recherche | Prüfer |
|---|---|---|
| BERLIN | 7.Januar 1998 | Angiolini, D |